# EUROPÄISCHE PATENTANMELDUNG

(11) **EP 2 957 881 A1**
(43) Veröffentlichungstag der Anmeldung: **23.12.2015**
(21) Anmeldenummer: 14173052.3
(22) Anmeldetag: 18.06.2014
(51) Int. Cl.: G01L 1/22, G01L 5/16, G01L 5/00

(54) **Messaufnehmersystem, Messaufnehmerelement, Verfahren zur Herstellung des Messaufnehmerelements und Einlegteil mit dem Messaufnehmerelement**

(71) Anmelder: Technische Universität Darmstadt, 64289 Darmstadt (DE)
(72) Erfinder: Lyashenko, Alexandra, 64287 Darmstadt (DE); Hielscher, Jürgen, 64289 Darmstadt (DE); Meiß, Thorsten, 64289 Darmstadt (DE)
(74) Vertreter: Katscher Habermann Patentanwälte

(57) **Zusammenfassung**

Die Erfindung betrifft ein Messaufnehmersystem (12) zur Anordnung mehrerer Messaufnehmer (14) auf einer dreidimensional strukturierten Oberfläche (22), wobei das Messaufnehmersystem (12) eine Trägerschicht (13) mit einem Flächeninhalt und mehrere auf der Trägerschicht (13) angeordnete Messaufnehmer (14) aufweist, wobei die Trägerschicht (13) so an die dreidimensional strukturierte Oberfläche (22) angepasst ist, dass die Trägerschicht (13) vollständig an der dreidimensional strukturierten Oberfläche (22) anliegt, wenn das Messaufnehmersystem (12) bestimmungsgemäß an der dreidimensional strukturierten Oberfläche (22) angeordnet ist, und dass der Flächeninhalt der Trägerschicht (13) konstant bleibt. Die Erfindung betrifft auch ein Messaufnehmerelement (20) zur Erfassung von Kenngrößen einer Krafteinwirkung in drei Raumrichtungen mit dem Messaufnehmersystem (12), ein Verfahren (1) zur Herstellung des Messaufnehmerelements (20) und ein Einlegteil mit einem erfindungsgemäßen Messaufnehmerelement (20) zur ortsaufgelösten Messung der Krafteinwirkung.

## Beschreibung

Die Erfindung betrifft ein Messaufnehmersystem zur Anordnung mehrerer Messaufnehmer auf einer dreidimensional strukturierten Oberfläche.

Zur Erfassung von Kenngrößen einer Krafteinwirkung in drei Raumrichtungen können resistive, kapazitive oder piezoresistive Messaufnehmer auf einer Erhöhung, die einen Bereich einer dreidimensional strukturierten Oberfläche bildet, angeordnet werden und ausgehend von den Messaufnehmern erfassten Messdaten eine Bestimmung der Kenngrößen der Krafteinwirkung erfolgen.

Aus der Praxis sind jedoch ausschließlich Prototypen solcher Anwendungen bekannt, da die Herstellung solcher Messsysteme mit einem erheblichen Aufwand verbunden ist. Zum einen müssen die Messaufnehmer auf der Erhöhung mit einer hohen Genauigkeit angeordnet und ausgerichtet werden, da durch geringe Abweichungen in der Anordnung oder in der Ausrichtung der Messaufnehmer auf der dreidimensional strukturierten Oberfläche die Genauigkeit der Messdaten negativ beeinflusst werden kann. Eine Anpassung der planen Messaufnehmer auf die dreidimensional strukturierte Oberfläche kann auch mit einem erheblichen Aufwand verbunden werden, so dass zum anderen die Anordnung und die Ausrichtung der Messaufnehmer auf der dreidimensional strukturierten Oberfläche einzeln vorgenommen werden müssen.

Soll eine ortsaufgelöste Erfassung der Kenngrößen der Krafteinwirkung erfolgen, so müssen mehrere Messaufnehmer auf mehreren in einem zweidimensionalen Array angeordneten Erhöhungen angeordnet und ausgerichtet werden, wobei die Anzahl der Messaufnehmer mit einer steigenden Auflösung und steigenden Abmessungen des Arrays mehrere Tausende betragen kann. Eine Anordnung sowie eine Ausrichtung einzelner Messaufnehmer werden dadurch unmöglich.

Es wird deshalb als eine Aufgabe der vorliegenden Erfindung angesehen, ein Messaufnehmersystem zur Anordnung mehrerer Messaufnehmer auf einer dreidimensional strukturierten Oberfläche derart auszugestalten, dass eine Anordnung der Messaufnehmer auf der dreidimensional strukturierten Oberfläche auf einfache Weise möglich wird und die Abweichungen in der Position und in der Ausrichtung der Messaufnehmer auf der dreidimensional strukturierten Oberfläche minimiert werden.

Diese Aufgabe wird erfindungsgemäß dadurch gelöst, dass das Messaufnehmersystem eine Trägerschicht mit einem Flächeninhalt und mehrere auf der Trägerschicht angeordnete Messaufnehmer aufweist, wobei die Trägerschicht so an die dreidimensional strukturierte Oberfläche angepasst ist, dass die Trägerschicht vollständig an der dreidimensional strukturierten Oberfläche anliegt, wenn das Messaufnehmersystem bestimmungsgemäß an der dreidimensionalen Oberfläche angeordnet ist, und dass der Flächeninhalt der Trägerschicht konstant bleibt.

Die auf der Trägerschicht angeordneten Messaufnehmer können erfindungsgemäß resistive, kapazitive oder piezoresistive Messaufnehmer sein, die eine Erfassung von mechanischen Spannungen und daraus resultierenden Dehnungen bzw. Stauchungen und daraus eine Bestimmung von Kenngrößen der Krafteinwirkung in drei Raumrichtung aus den von den Messaufnehmern erfassten Messdaten ermöglichen.

Der Flächeninhalt der Trägerschicht ist erfindungsgemäß als eine mit der dreidimensional strukturierten Oberfläche in Kontakt stehende Fläche definiert und ändert sich bei der Anordnung des Messaufnehmersystems an der dreidimensional strukturierten Oberfläche nicht bzw. vernachlässigbar gering. Dadurch kann erreicht werden, dass die an der Trägerschicht angeordneten Messaufnehmer durch die Anordnung und durch die Ausrichtung nicht gestaucht bzw. gedehnt werden und dadurch die Eigenschaften der Messaufnehmer durch die Anordnung des Messaufnehmersystems an der dreidimensional strukturierten Oberfläche nicht verändert werden. Des Weiteren ermöglicht der konstante bzw. geringfügig geänderte Flächeninhalt der Trägerschicht eine Voranordnung der Messaufnehmer auf der Trägerschicht, wodurch Abweichungen in der Anordnung und in der Ausrichtung der Messaufnehmer auf der dreidimensional strukturierten Oberfläche vermieden werden können und die Messaufnehmer auf einfache Weise mit einem reduzierten Aufwand auf der dreidimensional strukturierten Oberfläche angeordnet werden können.

Die Trägerschicht ist zudem an die dreidimensional strukturierte Oberfläche derart angepasst, dass die Trägerschicht vollständig an der dreidimensional strukturierten Oberfläche anliegt, wenn das Messaufnehmersystem bestimmungsgemäß an der dreidimensionalen Oberfläche angeordnet ist. Die Trägerschicht kann erfindungsgemäß aus einem Kunststoffmaterial hergestellt sein, so dass eine Verformung der Trägerschicht und somit eine Anpassung der Trägerschicht an die dreidimensional strukturierte Oberfläche möglich ist, jedoch der Flächeninhalt der Trägerschicht konstant bleibt und eine Dehnung bzw. eine Stauchung der an der Trägerschicht angeordneten Messaufnehmer vermieden wird.

Die Trägerschicht kann erfindungsgemäß eine zusätzliche großflächig oder bereichsweise aufgebrachte Kleberschicht aufweisen, durch die eine stoffschlüssige Festlegung des Messaufnehmersystems und somit der einzelnen Messaufnehmer an der dreidimensional strukturierten Oberfläche ermöglicht wird. Durch eine derartige Anordnung des Messaufnehmersystems an der dreidimensional strukturierten Oberfläche wird für eine Messung ausreichende Übertragung der Kräfte und Dehnungen bzw. Stauchungen von der dreidimensional strukturierten Oberfläche auf die einzelnen Messaufnehmer erreicht.

Durch das Messaufnehmersystem wird zusätzlich möglich, in einem Anordnungs- und Ausrichtungsverfahren Messaufnehmer zeitgleich auf mehreren eine zusammenhängende dreidimensional strukturierte Oberfläche bildenden Messaufnehmerelementen anzuordnen und auszurichten, so dass insbesondere eine Herstellung eines Arrays zur ortsaufgelösten Erfassung der Kenngrößen der Krafteinwirkung auf einfache Weise ohne eine aufwendige Anordnung und Ausrichtung einzelnen Messaufnehmer möglich wird.

Gemäß einer Ausgestaltung des erfindungsgemäßen Messaufnehmersystems ist vorteilhafterweise vorgesehen, dass die Trägerschicht einen das Messaufnehmersystem in einzelne Anlagebereiche unterteilenden Abtrennbereich aufweist, wobei durch eine Trennung der Anlagebereiche voneinander entlang des Abtrennbereichs die Anlagebereiche mit einem gleich bleibenden Flächeninhalt an die dreidimensional strukturierte Oberfläche angelegt werden können. Erfindungsgemäß kann der Abtrennbereich eine Perforation oder einen Einschnitt in der Trägerschicht aufweisen.

Die Perforation bzw. der Einschnitt sind erfindungsgemäß so ausgestaltet, dass ein Anlegen der Anlagebereiche an die dreidimensional strukturierte Oberfläche ohne eine Dehnung bzw. eine Stauchung der Anlagebereiche und somit ohne eine Änderung des Flächeninhalts der Trägerfolie auf einfache Weise vorgenommen werden kann. So können die Perforation bzw. der Einschnitt beispielsweise einen Anlagebereich derart von den anderen Anlagebereichen abtrennen, dass eine Verformung der Trägerschicht entlang einer Linie ohne eine Änderung des Flächeninhalts möglich wird und der Anlagebereich beispielsweise unter einem Winkel zu der Trägerschicht angeordnet werden kann. Beispielsweise können die Perforation bzw. der Einschnitt in Form sich in einem Punkt schneidender Geraden ausgestaltet sein und drei, vier oder mehr aneinander angrenzende Anlagebereiche definieren.

Erfindungsgemäß können die einzelnen Anlagebereiche derart ausgestaltet sein, dass in einem Anlagebereich ein Messaufnehmer oder mehrere Messaufnehmer zur Erfassung einer Kenngröße der Krafteinwirkung in eine Raumrichtung angeordnet sind. Durch die Perforation bzw. durch den Einschnitt können dann die Anlagebereiche ohne die Veränderung der Position der einzelnen Messaufnehmer auf einem Anlagebereich zueinander und somit ohne eine Beeinträchtigung der Messgenauigkeit auf der dreidimensional strukturierten Oberfläche angelegt werden.

Durch die erfindungsgemäße Abtrennung der Anlagebereiche entlang des Abtrennbereiches voneinander kann das Messaufnehmersystem auf einfache Weise auf der dreidimensional strukturierten Oberfläche angeordnet werden und die Abweichungen in der Position und in der Ausrichtung der Messaufnehmer auf der dreidimensional strukturierten Oberfläche minimiert werden.

Vorteilhafterweise ist erfindungsgemäß vorgesehen, dass das Messaufnehmersystem ein strukturiert beschichtetes Kunststofffolienelement ist. Das Kunststofffolienelement kann beispielsweise aus Polyethylen, Polyimid, Polypropylen, Polyvinylchlorid, Polystyrol, Polyester oder Polycarbonat hergestellt sein. Durch das Kunststofffolienelement kann sich das Messaufnehmersystem ohne eine Änderung des Flächeninhalts insbesondere bei den durch die Perforation bzw. durch den Einschnitt voneinander abgegrenzten Anlagebereiche verformen und die Trägerschicht auf einfache Weise an die dreidimensional strukturierte Oberfläche angelegt werden.

Die auf der Trägerschicht angeordnete Messaufnehmer können durch subtraktive oder additive Verfahren auf die Trägerschicht aufgebracht werden, wodurch Kosten und Aufwand bei der Herstellung des Messaufnehmersystems reduziert werden können. Die Messaufnehmer können beispielsweise in einem additiven Verfahren gedruckt, geprägt oder aufgedampft werden sowie in einem subtraktiven Verfahren aus einer vollflächig auf die Trägerschicht aufgebrachten funktionalen Schicht ausgestanzt, ausgeätzt oder ausgelasert werden. Erfindungsgemäß ist auch vorgesehen, dass das Messaufnehmersystem eine durch einen Laser vorstrukturierte Prägefolie sein kann.

Erfindungsgemäß ist vorgesehen, dass auf einem Messaufnehmersystem mehrere Messaufnehmer zur Anordnung und Ausrichtung auf mehreren Verformungselementen angeordnet werden können. Durch eine großflächige und in einem Schritt durchführbare Herstellung eines derartig ausgestalteten Messaufnehmersystems kann das Messaufnehmersystem auf einfache Weise zeitgleich auf mehreren Verformungselementen angeordnet und ausgerichtet werden.

Da die Trägerschicht vollständig an der dreidimensional strukturierten Oberfläche anliegt und die auf der Trägerschicht angeordnete Messaufnehmer bei der Anordnung des Messaufnehmersystems an der dreidimensional strukturierten Oberfläche nicht gedehnt bzw. gestaucht werden, wird dadurch die Anordnung und die Ausrichtung der Messaufnehmer auf der dreidimensionalen Oberfläche erleichtert und vereinfacht. Zusätzlich wird erreicht, dass die Eigenschaften der Messaufnehmer sich nach der Anordnung des Messaufnehmersystems an der dreidimensionalen Oberfläche nicht verändern und dadurch eine nachträgliche Kompensierung einer durch eine mögliche Veränderung der Eigenschaften der Messaufnehmer auftretenden Abweichung entfällt.

Eine Klebeschicht kann erfindungsgemäß die Messaufnehmer auf der dreidimensional strukturierten Oberfläche festlegen, so dass die Anordnung und die Ausrichtung der Messaufnehmer auf der dreidimensional strukturierten Oberfläche nachträglich nicht verändert werden kann und dadurch die Lebensdauer des an der dreidimensional strukturierten Oberfläche angeordneten Messaufnehmersystems verlängert wird. Insbesondere die durch einen Laser vorstrukturierte Prägefolie ist vorteilhaft, da eine Kleberschicht bereits vorhanden ist und die Kosten durch eine Auftragung einer zusätzlichen Kleberschicht auf das Messaufnehmersystem weiter minimiert werden können.

Die Erfindung betrifft auch ein Messaufnehmerelement zur Erfassung einer Kenngröße einer Krafteinwirkung auf eine dreidimensional strukturierte Oberfläche des Messaufnehmerelements.

Erfindungsgemäß ist vorgesehen, dass das Messaufnehmerelement mindestens ein unter der Krafteinwirkung verformbares und einen Bereich einer dreidimensional strukturierten Oberfläche des Messaufnehmerelements bildendes Verformungselement aufweist und dass an der dreidimensional strukturierten Oberfläche des Messaufnehmerelements ein Messaufnehmersystem wie oben beschrieben derart angeordnet ist, dass mindestens ein Messaufnehmer des Messaufnehmersystems an dem Verformungselement anliegt. Durch die Verformung des Verformungselements unter der Krafteinwirkung verformen sich die an der dreidimensional strukturierten Oberfläche angeordneten Messaufnehmer und dadurch können Kenngrößen der Krafteinwirkung in drei Raumrichtungen erfasst werden.

Das Verformungselement kann erfindungsgemäß derart ausgestaltet sein, dass das Verformungselement sich bereits bei einer geringen Krafteinwirkung verformt und dass die an der dreidimensional strukturierten Oberfläche angeordnete Messaufnehmer eine messbare Dehnung bzw. Stauchung erfassen können. Das Verformungselement kann erfindungsgemäß auch aus Metall, aus Metalllegierungen oder aus anderen Materialien hergestellt sein. So kann beispielsweise das Verformungselement aus einem elastischen, leicht verformbaren Material hergestellt und beispielsweise in Form einer rotations- oder einer drehsymmetrischen Erhöhung an einer ebenen Fläche ausgestaltet sein. Erfindungsgemäß können auch die Messaufnehmer auf dem Verformungselement drehsymmetrisch angeordnet sein und entsprechend auf dem Messaufnehmersystem vorangeordnet und ausgerichtet sein.

Durch die bereits vorangeordneten und ausgerichteten Messaufnehmer auf dem Messaufnehmersystem werden die Anordnung und die Ausrichtung der Messaufnehmer auf der dreidimensionalen Oberfläche des Messaufnehmerelements erleichtert und vereinfacht. Somit kann das erfindungsgemäße Messaufnehmerelement ohne einen großen Aufwand und kostengünstig hergestellt werden. Insbesondere bei mehreren ein zweidimensionales Array zur ortsaufgelösten Erfassung der Krafteinwirkung bildenden Messaufnehmerelementen können die Messaufnehmer auf einzelnen Verformungselementen zeitgleich auf einfache Weise angeordnet und ausgerichtet werden.

Es ist bevorzugt vorgesehen, dass das Messaufnehmerelement einen Kontaktierungsträger mit mehreren Kontaktflächen und/oder mehreren Leiterbahnen aufweist, durch den die Messaufnehmer untereinander kontaktiert werden können und die Messdaten der Messaufnehmer abgelesen werden können. Der Kontaktierungsträger kann erfindungsgemäß in Form einer Kontaktierungsplatte ausgestaltet sein, die mehrere gedruckte, aufgedampfte oder ausgestanzte Leiterbahnen und/oder Kontaktflächen aufweist und beispielsweise aus einem Kunststoffmaterial hergestellt ist.

Erfindungsgemäß können die Messaufnehmer auf der Trägerschicht des Messaufnehmersystems Kontaktflächen aufweisen, die mit Kontaktflächen auf dem Kontaktierungsträger elektrisch leitend kontaktiert werden können. Um eine Kontaktierung der Messaufnehmer mit dem Kontaktierungsträger zu ermöglichen, kann die dreidimensional strukturierte Oberfläche plane Flächen innerhalb oder außerhalb des Verformungselements aufweisen, an denen die Kontaktflächen der Messaufnehmer angeordnet sind. Die planen Flächen können sich erfindungsgemäß bei der Krafteinwirkung auf das Verformungselement nicht bzw. nur vernachlässigbar gering dehnen bzw. stauchen, so dass eine sichere Kontaktierung der Kontaktflächen auf dem Kontaktierungsträger mit den Kontaktflächen der Messaufnehmer möglich wird und so dass die von den Messaufnehmer erfassten Messdaten nicht durch eine Dehnung bzw. Stauchung der Kontaktflächen der Messaufnehmer beeinflusst werden können.

Des Weiteren können die Leiterbahnen sowie die Kontaktflächen derart auf dem Kontaktierungsträger angeordnet sein, dass mehrere Messaufnehmerelemente mit einem Kontaktierungsträger beispielsweise in einem zweidimensionalen Array kontaktiert werden können. Durch eine derartige Anordnung der Leiterbahnen und der Kontaktflächen können Kenngrößen der Krafteinwirkung in drei Raumrichtungen auch ortsaufgelöst erfasst und ausgewertet werden. Um die durch die Messaufnehmer erfassten Messdaten ablesen und auswerten zu können, kann der Kontaktierungsträger eine Kontaktierungseinheit beispielsweise in Form eines Kontaktsteckers zur Kontaktierung der Messaufnehmerelemente mit einer externen Erfassungs- und/oder Auswertungseinheit aufweisen.

Durch abweichend ausgestaltete Kontaktierungsträger kann das gleich ausgestaltete Messaufnehmerelement sowie die auf dem Messaufnehmerelement angeordnete Messaufnehmer untereinander auf unterschiedliche Weise je nach dem vorgesehenen Einsatz des Messaufnehmerelements kontaktiert werden.

Bei einer besonders vorteilhaften Ausgestaltung des Messaufnehmerelements ist erfindungsgemäß vorgesehen, dass der Kontaktierungsträger flexibel ist. So kann beispielsweise der Kontaktierungsträger aus einem elastisch verformbaren Kunststoff wie beispielsweise Polyethylen, Polyimid, Polypropylen, Polyvinylchlorid, Polystyrol, Polyester oder Polycarbonat hergestellt sein. Durch den flexiblen Kontaktierungsträger kann ein aus mehreren Messaufnehmerelementen gebildetes zweidimensionales Array ortsaufgelöst die Krafteinwirkung auf einem unebenen oder sich verändernden Untergrund, wie beispielsweise einer Schuhsohle, erfassen, wodurch der Einsatz des zweidimensionalen Arrays insbesondere in der Sportanalytik beispielsweise zur Ganganalyse, in der medizinischen Diagnostik beispielsweise zur Druckstellenerkennung, in Assistenzsystemen beispielsweise zur Anpassung von Prothesen, Orthesen, Exoskeletten und in weiteren Bereichen ermöglicht wird.

Erfindungsgemäß ist vorgesehen, dass das Verformungselement aus einem gießbaren verformbaren Kunststoffmaterial hergestellt ist. Das Kunststoffmaterial kann erfindungsgemäß Polyurethan, Polyethylen, Polypropylen, Polyester, Polycarbonat oder ein weiteres elastisch verformbares und gießbares Kunststoffmaterial sein. Dadurch, dass das Verformungselement aus einem gießbaren Kunststoffmaterial hergestellt ist, wird eine kostengünstige und einfache Herstellung des Verformungselements und somit des Messaufnehmerelements in einem Gießverfahren ermöglicht.

Vorteilhafterweise ist erfindungsgemäß vorgesehen, dass das Verformungselement pyramidenstumpfförmig oder halbsphärenförmig oder zylinderförmig oder kegelstumpfförmig ausgestaltet ist. Die Messaufnehmer können dadurch erfindungsgemäß drehsymmetrisch an dem Verformungselement angeordnet werden und bei dem pyramidenstumpfförmigen Verformungselement beispielsweise an den Seitenflächen angeordnet sein. Eine drehsymmetrische Anordnung der Messaufnehmern auf dem Verformungselement erlaubt eine einfache Zuordnung der auf das Verformungselement wirkenden Kraftanteilen zu den Raumrichtungen und eine mit einem geringen Aufwand durchführbare Auswertung der von den Messaufnehmern erfassten Messdaten.

Dadurch, dass die Messaufnehmer auf der Trägerschicht bereits vorangeordnet und ausgerichtet sind, entfällt zusätzlich eine aufwändige Anordnung und Ausrichtung der Messaufnehmer auf dem Verformungselement auch bei rotations- oder drehsymmetrischen Verformungselementen und das Messaufnehmerelement kann auf einfache Weise und kostengünstig hergestellt werden.

Die Erfindung betrifft auch ein Verfahren zur Herstellung eines erfindungsgemäßen Messaufnehmerelements wie oben beschrieben.

Es ist bevorzugt vorgesehen, dass in einem Fertigungsschritt eine Trägerschicht eines erfindungsgemäßen Messaufnehmersystems wie oben beschrieben vollständig an eine dreidimensional strukturierte Oberfläche des Messaufnehmerelements angelegt wird und dass dabei ein Flächeninhalt der Trägerschicht konstant bleibt. So kann beispielsweise das Messaufnehmersystem mit mehreren durch eine Perforation bzw. einen Einschnitt abgetrennten Anlagebereichen auf die dreidimensional strukturierte Oberfläche aufgebracht werden und das Messaufnehmersystem oder die auf dem Messaufnehmersystem angeordnete Messaufnehmer beispielsweise durch einen Kleber auf der dreidimensionalen Oberfläche festgelegt werden. Die Trägerfolie des Messaufnehmersystems wird dabei erfindungsgemäß vollständig auf die dreidimensional strukturierte Oberfläche angelegt und die Messaufnehmer werden auf dem Verformungselement angeordnet.

Durch das erfindungsgemäße Verfahren kann das Messaufnehmerelement schnell und kostengünstig hergestellt werden, wobei eine Anordnung der Messaufnehmer auf der dreidimensional strukturierten Oberfläche auf einfache Weise möglich wird und die Abweichungen in der Position und in der Ausrichtung der Messaufnehmer auf der dreidimensional strukturierten Oberfläche minimiert werden.

Bei dem erfindungsgemäßen Verfahren ist vorteilhafterweise vorgesehen, dass in dem Fertigungsschritt eine Verformungsmasse in eine Negativform mit dem an der Negativform angeordneten Messaufnehmersystem eingeführt wird, die nach deren Verfestigung mindestens ein Verformungselement des Messaufnehmerelements bildet, wobei die Trägerschicht des Messaufnehmersystems an eine dreidimensional strukturierte und die dreidimensional strukturierte Oberfläche des Messaufnehmerelements vorgebende Negativformoberfläche der Negativform angelegt wird.

Die Trägerfolie kann in dem Fertigungsschritt beispielsweise durch ein Gewicht der Verformungsmasse an die Negativformoberfläche angedrückt werden oder an der Negativformoberfläche durch zusätzliche Haftmittel vor dem Einführen der Verformungsmasse festgelegt werden.

Die Verformungsmasse kann beispielsweise ein gießbares Kunststoffmaterial sein, das nach einer Verfestigung das Verformungselement des Messaufnehmerelements bildet. So kann beispielsweise die Verformungsmasse ein thermoplastisch verformbares Kunststoffmaterial sein und die Negativform aus einem thermisch beständigen Material wie beispielsweise Keramik, Metall oder Kunststoff hergestellt sein. Das Material der Trägerschicht kann erfindungsgemäß derart an das Material des Verformungselements angepasst sein, dass das Material der Trägerschicht unter der in dem Fertigungsschritt eingestellten Temperatur sich nicht plastisch verformen kann und somit keine Veränderung des Flächeninhalts der Trägerschicht in dem Fertigungsschritt stattfindet.

Des Weiteren kann auch die auf der Trägerschicht zur Festlegung des Messaufnehmersystems oder der Messaufnehmer auf dem Verformungselement aufgebrachte Kleberschicht an die in dem Fertigungsschritt eingestellte Temperatur angepasst sein, so dass die Kleberschicht thermisch aktiviert wird und bereits in dem Fertigungsschritt ohne eine zusätzliche Behandlung der Trägerschicht eine Festlegung des Messaufnehmersystems oder der Messaufnehmer auf dem Verformungselement möglich wird. So kann beispielsweise bei einer durch einen Laser vorstrukturierten Prägefolie mit einer thermisch aktivierenden Kleberschicht die Festlegung der Messaufnehmer auf dem Verformungselement bereits im Fertigungsschritt bei der in dem Fertigungsschritt eingestellten Temperatur erfolgen.

Auch eine UV-vernetzende oder lösemittelbasierende Verformungsmasse kann erfindungsgemäß zur Herstellung des Verformungselements eingesetzt werden, wobei eine Festlegung des Messaufnehmersystems oder der Messaufnehmer auf dem Verformungselement durch die aufgebrachte Kleberschicht beispielsweise in einem zusätzlichen Fixierungsschritt durch eine thermische Behandlung vorgenommen werden kann.

Die Trägerschicht kann sich der Negativform durch das Gewicht der Verformungsmasse beispielsweise durch eine Trennung der durch die Perforation bzw. durch den Einschnitt voneinander abgetrennten Anlagebereiche anpassen, so dass nach dem Fertigungsschritt die Trägerschicht mit den auf der Trägerschicht angeordneten Messaufnehmern auf dem Verformungselement angeordnet ist. Auch eine Anordnung des Messaufnehmersystems vor dem Einführen der Verformungsmasse in die Negativform beispielsweise durch auf die Negativformoberfläche angeordnete Haftmittel ist erfindungsgemäß möglich.

Um eine Anordnung und eine Ausrichtung der Messaufnehmer auf dem Verformungselement vorzunehmen und die Abweichungen in der Position und in der Ausrichtung der Messaufnehmer auf der dreidimensional strukturierten Oberfläche zu minimieren, kann das Messaufnehmersystem auf der Negativform in einem Vorbereitungsschritt lösbar, beispielsweise durch mehrere Ausrichtungselemente in Form von Bolzen oder zusätzlichen Haftmitteln, festgelegt sein.

Durch die gießbare Verformungsmasse werden die Messaufnehmer des Messaufnehmersystems zusätzlich an dem Verformungselement des Messaufnehmerelements festgelegt, so dass eine Verklebung der Trägerschicht oder der einzelnen Messaufnehmer mit der dreidimensionalen Oberfläche entfallen kann und die Herstellungskosten zusätzlich reduziert werden können.

Vorteilhafterweise ist erfindungsgemäß vorgesehen, dass nach dem Fertigungsschritt in einem Verfestigungsschritt die Verformungsmasse durch UV- und/oder IR- und/oder Mikrowellenstrahlung und/oder Wärmestrahlung verfestigt wird. So kann beispielsweise die Verformungsmasse aus Polyurethan durch IR-Strahlung verfestigt werden, um das Verfahren zu beschleunigen und dadurch die Herstellungskosten zu reduzieren.

Es ist bevorzugt vorgesehen, dass vor dem Fertigungsschritt oder nach dem Fertigungsschritt in einem Kontaktierungsschritt ein Kontaktierungsträger an das Messaufnehmersystem angeordnet wird. Der Kontaktierungsträger kann erfindungsgemäß vorgefertigt sein und mehrere Leiterbahnen und/oder Kontaktflächen aufweisen. Die Leiterbahnen sowie die Kontaktflächen können derart an dem Kontaktierungsträger angeordnet sein, dass sowohl eine Erfassung der Messdaten eines Messaufnehmerelementes als auch eine ortsaufgelöste Erfassung der Messdaten von den mehreren in einem zweidimensionalen Array angeordneten Messaufnehmern ermöglicht wird.

Erfindungsgemäß können der Kontaktierungsträger und/oder die Negativform Füllöffnungen aufweisen, durch die die Verformungsmasse in die Negativform eingeführt wird. Insbesondere bei der Kontaktierung des Kontaktierungsträgers und des Messaufnehmersystems vor dem Fertigungsschritt sind solche Füllöffnungen vorteilhaft.

Die Messaufnehmer des Messaufnehmerelements können mit den Kontaktflächen des Kontaktierungsträgers gelötet, kaltverschweißt, durch eine Niettechnik aneinander festgelegt oder leitfähig verklebt werden. Um eine dauerhafte und sichere Kontaktierung der Messaufnehmer mit dem Kontaktierungsträger zu erreichen, kann der Kontaktierungsträger auf dem Messaufnehmerelement zusätzlich beispielsweise durch einen bereichsweise auf den Kontaktierungsträger aufgebrachten Kleber oder eine Schraubverbindung festgelegt sein. Erfindungsgemäß können die Kontaktflächen der Messaufnehmer mit den Kontaktflächen des Kontaktierungsträgers durch die Verfestigung der Verformungsmasse derart aneinander festgelegt werden, dass durch einen mechanischen Kontakt die Messaufnehmer und der Kontaktierungsträger elektrisch kontaktiert werden und dadurch ein zusätzlicher Kontaktierungsaufwand reduziert wird.

Erfindungsgemäß ist vorgesehen, dass in dem Kontaktierungsschritt der Kontaktierungsträger und/oder Messaufnehmer in einem Bearbeitungsschritt zusätzlich bearbeitet werden. So kann in dem Bearbeitungsschritt beispielsweise die Oberfläche der Kontaktflächen der Messaufnehmer zur Verbesserung der Haftung der Kontaktflächen der Messaufnehmer auf dem Kontaktierungsträger behandelt werden.

Es ist bevorzugt vorgesehen, dass nach dem Fertigungsschritt in einem Ablöseschritt die Negativform von dem Messaufnehmerelement entfernt wird. Die Negativform kann beispielsweise nach einer vorgenommenen Abkühlung oder nach der in dem Verfestigungsschritt vorgenommenen Verfestigung der Verformungsmasse sicher ohne eine Beeinträchtigung der Messaufnehmer von dem Messaufnehmerelement entfernt werden. Um den Ablöseschritt auf einfache Weise durchführen zu können, kann erfindungsgemäß die Negativformoberfläche der Negativform vor dem Fertigungsschritt zusätzlich beispielsweise mit einem Ablösemittel bearbeitet werden. Da die Messaufnehmer auf dem Verformungselement angeordnet sind und die Negativform nicht mit den Messaufnehmern, sondern mit der die Messaufnehmer abdeckenden Trägerschicht in Kontakt kommt, kann in dem Ablöseschritt eine Schädigung der Messaufnehmer durch die Ablösemittel oder durch die Ablösung des Messaufnehmerelements von der Negativform ausgeschlossen werden.

Es ist vorgesehen, dass nach dem Ablöseschritt in einem Freilegschritt die Trägerschicht des Messaufnehmersystems von dem Messaufnehmerelement entfernt wird, wobei die an dem Messaufnehmersystem angeordneten Messaufnehmer an der dreidimensional strukturierten Oberfläche des Messaufnehmerelements angeordnet bleiben. Durch die Entfernung der Trägerschicht von dem Messaufnehmerelement wird ermöglicht, dass die Erfassung der durch die Krafteinwirkung in dem Verformungselement des Messaufnehmerelements auftretenden Dehnung bzw. Stauchung von den Messaufnehmern durch die Eigenschaften der Trägerschicht nicht beeinflusst wird. Ein Ablösen der Messaufnehmer von der Trägerschicht kann beispielsweise durch eine zusätzliche zwischen der Trägerschicht und den Messaufnehmer aufgebrachte Ablöseschicht erleichtert werden. Insbesondere kann bei einer durch einen Laser vorstrukturierten Prägefolie die Trägerschicht auf einfache Weise entfernt werden.

Der Ablöseschritt kann erfindungsgemäß erst unmittelbar vor der Nutzung des Messaufnehmerelements durchgeführt werden, so dass die Messaufnehmer auf dem Messaufnehmerelement während eines Transportes und/oder einer Lagerung von Umwelteinflüssen sowie von mechanischen Schäden geschützt werden können.

Die Erfindung betrifft auch ein Einlegteil und erfindungsgemäß ist vorgesehen, dass das Einlegteil mindestens ein erfindungsgemäßes Messaufnehmerelement wie oben beschrieben aufweist. Das Einlegteil kann beispielsweise mehrere mit einem Kontaktierungsträger kontaktierte Messaufnehmerelemente aufweisen, die derart an dem Kontaktierungsträger angeordnet sind, dass eine ortsaufgelöste Erfassung von Kenngrößen der Krafteinwirkung in drei Raumrichtungen ermöglicht wird. Erfindungsgemäß kann das Einlegteil eine Erfassungs- und/oder eine Auswertungseinheit aufweisen, so dass eine Erfassung und/oder eine Auswertung der von den Messaufnehmern erfassten Messdaten möglich werden.

Das erfindungsgemäße Einlegteil kann beispielsweise in Sportanalytik zur Messung der Bodenreaktionskräften unter dem Fuß eines Menschen beim Gehen oder beim Laufen und zur Erkennung von Fehlstellungen des Bewegungsapparates und Fehlbelastungen eines menschlichen Körpers eingesetzt werden. In der medizinischen Diagnostik kann das erfindungsgemäße Einlegteil zur Früherkennung von Druckstellenbildungen durch einen permanenten Druck auf das Gewebe bei Bettlägerigen, Rollstuhlnutzern eingesetzt werden. Des Weiteren kann das Einlegteil zur Vermeidung von Verletzungen durch den Einfluss und zur Ableitung von Messgrößen zur Funktion von Assistenzsystemen wie beispielsweise Prothesen, Orthesen oder Exoskeletten eingesetzt werden. Auch eine Erfassung der Interaktion des Menschen mit technischen Systemen wie beispielsweise Computern oder Assistenzsystemen sowie eine Erfassung der Interaktionen zwischen einer Maschine und der Umwelt wie beispielsweise zur Messung von Schwingungen sind mit dem erfindungsgemäßen Einlegteil möglich.

Erfindungsgemäß ist vorgesehen, dass das Einlegteil mehrere in einem zweidimensionalen Array angeordnete Messaufnehmerelemente aufweist. Das Einlegteil kann vorteilhaft zu einer ortsaufgelösten Erfassung der Krafteinwirkung in drei Raumrichtungen eingesetzt werden und auf einfache Weise hergestellt werden.

Vorteilhafterweise ist vorgesehen, dass das Einlegteil einen Kontaktierungsträger mit mehreren Kontaktflächen und/oder mehreren Leiterbahnen aufweist, durch den die Messaufnehmer der Messaufnehmerelemente untereinander kontaktiert werden können und/oder die Messdaten der Messaufnehmer abgelesen werden können. So kann der Kontaktierungsträger beispielsweise alle Kontakte der Messaufnehmer nach außen führen oder eine Matrixverschaltung der Messaufnehmer miteinander ermöglichen.

Der Kontaktierungsträger kann erfindungsgemäß flexibel sein, so dass eine ortsaufgelöste Erfassung der Krafteinwirkung auf einem unebenen oder sich verändernden Untergrund ermöglicht wird.

Weitere vorteilhafte Ausgestaltungen des erfindungsgemäßen Messaufnehmersystems, des erfindungsgemäßen Messaufnehmerelements und des Einlegteils sowie das erfindungsgemäße Verfahren werden anhand der Zeichnung näher erläutert. Es zeigt:
- Fig. 1: schematisch einen möglichen Verlauf des erfindungsgemäßen Verfahrens;
- Fig. 2 und 3: eine Negativform in einem Vorbereitungsschritt;
- Fig. 4 und 5: eine Negativform mit einem an der Negativform angeordneten Messaufnehmersystem in einem Vorbereitungsschritt;
- Fig. 6 und 7: Messaufnehmerelemente nach einem Kontaktierungsschritt;
- Fig. 8 und 9: Messaufnehmerelemente nach einem Fertigungsschritt;
- Fig. 10 und 11: Messaufnehmerelemente nach einem Ablöse- und nach einem Freilegschritt;
- Fig. 12: ein Messaufnehmerelement mit an einem Verformungselement angeordneten Messaufnehmern.

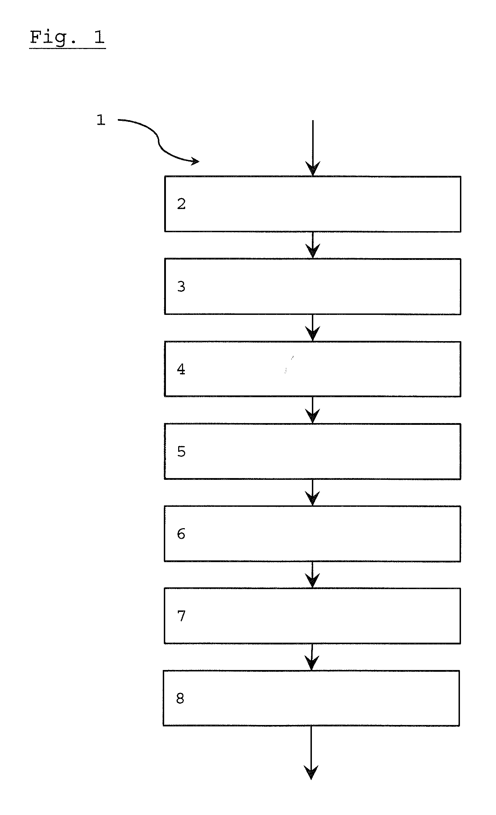

Fig. 1 zeigt schematisch einen möglichen Verlauf eines erfindungsgemäßen Verfahrens 1. In einem Vorbereitungsschritt 2 können das Messaufnehmersystem sowie die Negativform vorbereitet werden, beispielsweise das Messaufnehmersystem auf der Negativform lösbar festgelegt werden oder die Negativform mit einem Ablösemittel vorbehandelt werden.

In einem Bearbeitungsschritt 3 können die Kontaktflächen der Messaufnehmer oder die Trägerschicht bearbeitet werden und in einem nachfolgenden Kontaktierungsschritt 4 die Messaufnehmer des Messaufnehmersystems mit einem Kontaktierungsträger elektrisch kontaktiert werden.

In einem nachfolgenden Fertigungsschritt 5 kann eine Verformungsmasse in eine Negativform mit dem an der Negativform angeordneten Messaufnehmersystem eingeführt werden, wobei die Trägerschicht des Messaufnehmersystems durch ein Gewicht der Verformungsmasse an eine Negativformoberfläche der Negativform angelegt werden kann. Auch eine Festlegung der Trägerschicht an der Negativform durch beispielsweise zusätzliche Haftmittel vor dem Einführen der Verformungsmasse ist erfindungsgemäß möglich. Die Verformungsmasse kann beispielsweise ein gießbares Kunststoffmaterial sein, das nach einer Verfestigung das Verformungselement des Messaufnehmerelements bildet. Um die Verformungsmasse in die Negativform einführen zu können, können in dem Kontaktierungsträger oder in der Negativform Füllöffnungen zum Einführen der Verfestigungsmasse vorgesehen werden können.

Anschließend kann in einem Verfestigungsschritt 6 die Verformungsmasse durch UV- und/oder IR- und/oder Mikrowellenstrahlung und/oder Wärmestrahlung verfestigt werden.
Erfindungsgemäß kann der Kontaktierungsschritt 4 nach dem Fertigungsschritt 5 erfolgen.

Nach dem Kontaktierungsschritt 4 oder nach dem Fertigungsschritt 5 kann in einem Ablöseschritt 7 nun die Negativform sowie in einem Freilegschritt 8 die Trägerschicht des Messaufnehmersystems von dem Messaufnehmerelement entfernt werden.

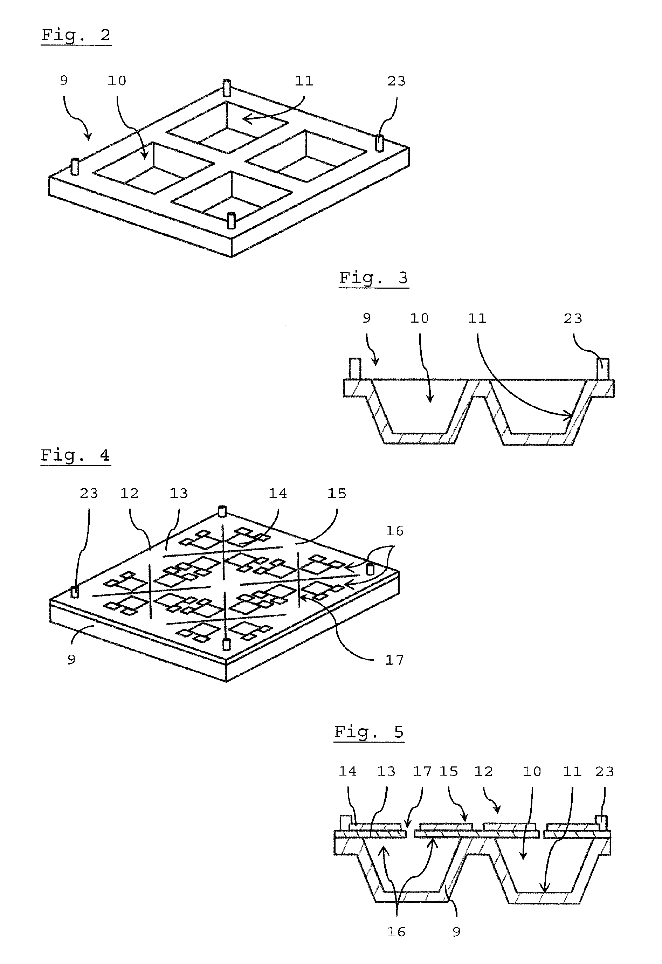

Fig. 2 und Fig. 3 zeigen eine perspektivische Ansicht und eine Schnittansicht einer Negativform 9 mit Vertiefungen 10, die eine einer dreidimensional strukturierten Oberfläche entsprechende Negativformoberfläche 11 aufweisen. Die Negativform 9 weist insgesamt vier pyramidenstumpfförmige Vertiefungen 10 auf, so dass mit der Negativform 9 vier Messaufnehmerelemente mit pyramidenstumpfförmigen Verformungselementen gefertigt werden können.

Fig. 4 und Fig. 5 zeigen eine perspektivische Ansicht und eine Schnittansicht der Negativform 9 mit einem Messaufnehmersystem 12. Das Messaufnehmersystem 12 weist eine Trägerschicht 13 und mehrere an der Trägerschicht 13 angeordnete Messaufnehmer 14 auf. Die auf der Trägerschicht 13 angeordnete Messaufnehmer 14 können erfindungsgemäß resistiv, kapazitiv oder piezoresistiv sein und eine Erfassung von Dehnung bzw. Stauchung und eine Bestimmung von Kenngrößen der Krafteinwirkung in drei Raumrichtungen aus den von den Messaufnehmern 14 erfassten Messdaten ermöglichen. Das Messaufnehmersystem 12 ist ein Kunststofffolienelement 15 in Form einer durch einen Laser vorstrukturierten Prägefolie, die bereits eine Trägerschicht, eine Kleberschicht, eine Ablöseschicht sowie durch einen Laser vorstrukturierte und die Messaufnehmer bildende Funktionsschicht beinhaltet.

Um eine Verformung der Trägerschicht 13 und somit eine Anpassung der Trägerschicht 13 an die dreidimensional strukturierte Oberfläche zu ermöglichen, jedoch eine Dehnung bzw. eine Stauchung der an der Trägerschicht 13 angeordneten Messaufnehmer 14 während des Verfahrens 1 zu vermeiden, weist die Trägerschicht 13 einen das Messaufnehmersystem 12 in einzelne Anlagebereiche 16 unterteilenden Abtrennbereich 17 auf. Der Abtrennbereich 17 ermöglicht ein Anlegen der Anlagebereiche 16 an die Negativformoberfläche 11 ohne eine Dehnung bzw. Stauchung der Anlagebereiche 16 und somit ohne eine Dehnung bzw. Stauchung der Messaufnehmer 14.

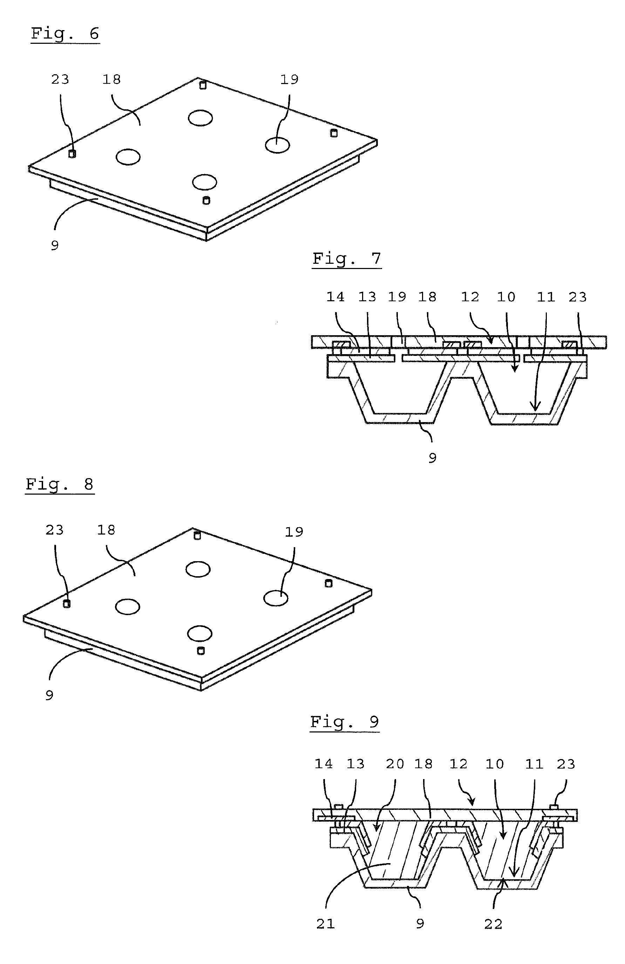

Fig. 6 und 7 zeigen eine perspektivische und eine Schnittansicht der Negativform 9 dem Kontaktierungsschritt 4. Ein Kontaktierungsträger 18 kontaktiert die Messaufnehmer 14 untereinander und führt Kontakte der Messaufnehmer 14 nach außen, so dass eine Ablesung der durch die Messaufnehmer 14 erfassten Messdaten ermöglicht wird. Die Verformungsmasse kann nach dem durchgeführten Kontaktierungsschritt 4 durch vorgesehene Füllöffnungen 19 in dem Kontaktierungsträger 18 eingeführt werden.

Um eine Kontaktierung der Messaufnehmer 14 mit dem Kontaktierungsträger 18 auf einfache Weise zu ermöglichen, kann der Kontaktierungsträger 18 von der Negativform 9 entfernt, mit dem Messaufnehmersystem 12 elektrisch leitend kontaktiert und erneut auf der Negativform 9 angeordnet werden.

Fig. 8 und Fig. 9 zeigen eine perspektivische und eine Schnittansicht von Messaufnehmerelementen 20 nach dem Fertigungsschritt 5. In dem Fertigungsschritt 5 wurde eine gießbare Verformungsmasse auf das Messaufnehmersystem 12 in die Negativform 9 eingeführt und die Trägerschicht 13 passte sich der Negativform 9 durch das Gewicht der Verformungsmasse an, wobei die durch den Abtrennbereich 17 voneinander abgetrennte Anlagebereiche 16 an die Negativformoberfläche 11 angeordnet wurden. Durch die erfindungsgemäße Abtrennung der Anlagebereiche 16 voneinander werden das Messaufnehmersystem 12 auf einfache Weise auf der dreidimensional strukturierten Oberfläche angeordnet und die Abweichungen in der Position und in der Ausrichtung der Messaufnehmer 14 auf der dreidimensional strukturierten Oberfläche minimiert.

Um eine Anordnung und eine Ausrichtung der Messaufnehmer 14 auf einem durch die verfestigte Verfestigungsmasse gebildeten Verformungselement 21 mit einer dreidimensional strukturierten Oberfläche 22 vorzunehmen und die Abweichungen in der Position und in der Ausrichtung der Messaufnehmer 14 auf der dreidimensional strukturierten Oberfläche 22 zu minimieren, wurde das Messaufnehmersystem 12 sowie der Kontaktierungsträger 18 auf der Negativform 9 in dem Vorbereitungsschritt 2 lösbar durch Ausrichtungselemente 23 in Form von Bolzen festgelegt.

Durch die auf der Trägerschicht 13 angeordnete Kleberschicht sind die Messaufnehmer 14 zusätzlich an der dreidimensional strukturierten Oberfläche 22 festgelegt, so dass ein versehentliches Ablösen der Messaufnehmer 14 von dem Verformungselement 21 verhindert wird. Durch die gießbare Verformungsmasse werden die Messaufnehmer 14 des Messaufnehmerelements 20 zusätzlich an dem Verformungselement 21 festgelegt.

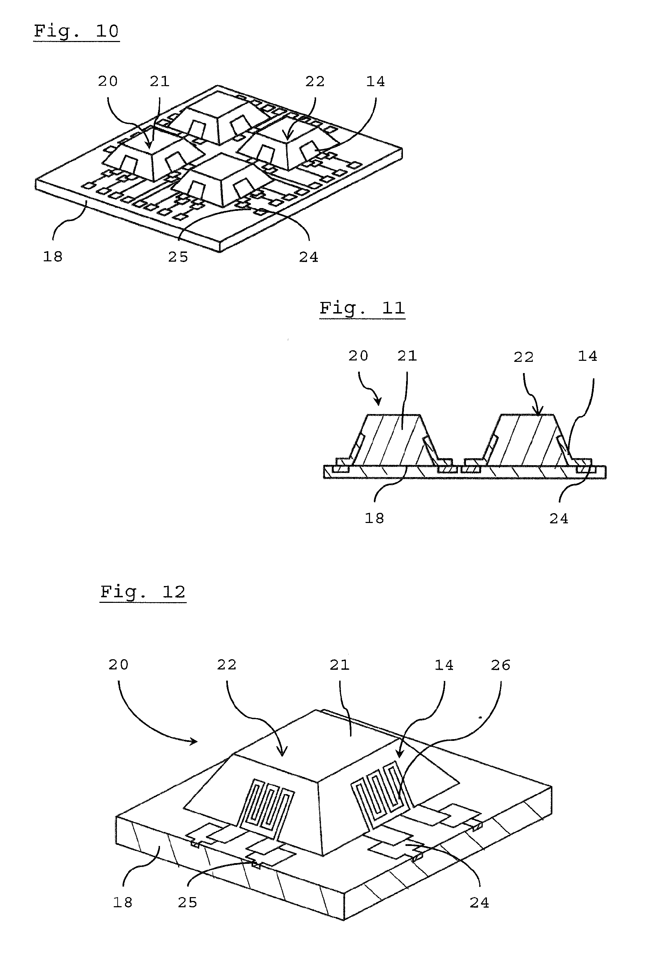

Fig. 10 und 11 zeigen die Messaufnehmerelemente 14 nach dem Ablöseschritt 7 und nach dem Freilegschritt 8. In dem Ablöseschritt 7 wurde die Negativform 9 von den Messaufnehmerelementen 20 entfernt. In dem Freilegschritt 8 wurde anschließend die Trägerschicht 13 des Messaufnehmersystems 12 von den Messaufnehmerelementen 20 entfernt, wobei die an dem Messaufnehmersystem 12 angeordneten Messaufnehmer 14 an der dreidimensional strukturierten Oberfläche 22 der Messaufnehmerelemente 20 angeordnet blieben.

Durch die Entfernung der Trägerschicht 13 von den Messaufnehmerelementen 20 wird erreicht, dass durch die Krafteinwirkung in dem Verformungselement 21 des Messaufnehmerelements 20 auftretende Dehnung bzw. Stauchung von den Messaufnehmern 14 durch die Eigenschaften der Trägerschicht 13 nicht beeinflusst werden.

Die Messaufnehmer 14 der Messaufnehmerelemente 20 sind mit Kontaktflächen 24 des Kontaktierungsträgers 18 beispielsweise durch eine leitfähige Kleberverbindung kontaktiert. Um eine dauerhafte und sichere Kontaktierung der Messaufnehmer 14 mit dem Kontaktierungsträger 18 zu erreichen, kann der Kontaktierungsträger 18 auf dem Messaufnehmerelement 20 zusätzlich durch einen bereichsweise auf den Kontaktierungsträger 18 aufgebrachten nicht leitfähigen Kleber oder durch die Haftung mit der verfestigten Verformungsmasse festgelegt werden. Durch Leiterbahnen 25 und Kontaktflächen 24 können die Messdaten der Messaufnehmer 14 mit einer externen Ablese- und/oder Auswertungseinheit abgelesen werden. Die Leiterbahnen 25 sowie die Kontaktflächen 24 sind derart auf dem Kontaktierungsträger 18 angeordnet, dass eine ortsaufgelöste Erfassung der Messdaten von den Messaufnehmerelementen 20 ermöglicht wird. Dazu können sowohl alle Kontakte der Messaufnehmer 14 nach außen geführt werden oder bei mehreren Messaufnehmerelementen 20 eine Matrixverschaltung zwischen den einzelnen Messaufnehmern 14 eingesetzt werden.

Fig. 12 zeigt eine vergrößerte Schnittansicht des Messaufnehmerelements 20 mit an dem Verformungselement 21 angeordneten Messaufnehmern 14 in Form von Dehnungsmessstreifen 26. Die Dehnungsmessstreifen 26 sind an dem Verformungselement 21 derart angeordnet, dass eine Erfassung von Kenngrößen der Krafteinwirkung in drei Raumrichtungen möglich ist.

Das Messaufnehmerelement 20 kann in ein Einlegteil integriert werden und beispielsweise in der Sportanalytik, in der medizinischen Diagnostik, zur Erfassung der Interaktion des Menschen mit technischen Systemen sowie zur Erfassung der Interaktionen zwischen einer Maschine und der Umwelt eingesetzt werden.

## Patentansprüche

1. Messaufnehmersystem (12) zur Anordnung mehrerer Messaufnehmer (14) auf einer dreidimensional strukturierten Oberfläche (22), wobei das Messaufnehmersystem (12) eine Trägerschicht (13) mit einem Flächeninhalt und mehrere auf der Trägerschicht (13) angeordnete Messaufnehmer (14) aufweist, wobei die Trägerschicht (13) so an die dreidimensional strukturierte Oberfläche (22) angepasst ist, dass die Trägerschicht (13) vollständig an der dreidimensional strukturierten Oberfläche (22) anliegt, wenn das Messaufnehmersystem (12) bestimmungsgemäß an der dreidimensionalen Oberfläche (22) angeordnet ist, und dass der Flächeninhalt der Trägerschicht (13) konstant bleibt.

2. Messaufnehmersystem (12) nach Anspruch 1, **dadurch gekennzeichnet, dass** die Trägerschicht (13) einen das Messaufnehmersystem (12) in einzelne Anlagebereiche (16) unterteilenden Abtrennbereich (17) aufweist, wobei durch eine Trennung der Anlagebereiche (16) voneinander entlang des Abtrennbereichs (17) die Anlagebereiche (16) mit einem gleich bleibenden Flächeninhalt an die dreidimensional strukturierte Oberfläche (22) angelegt werden können.

3. Messaufnehmersystem (12) nach einem der vorangehenden Ansprüche, **dadurch gekennzeichnet, dass** das Messaufnehmersystem (12) ein strukturiert beschichtetes Kunststofffolienelement (15) ist.

4. Messaufnehmerelement (20) zur Erfassung einer Kenngröße einer Krafteinwirkung auf eine dreidimensional strukturierte Oberfläche (22) des Messaufnehmerelements (20), **dadurch gekennzeichnet, dass** das Messaufnehmerelement (20) mindestens ein unter der Krafteinwirkung verformbares und einen Bereich einer dreidimensional strukturierten Oberfläche (22) des Messaufnehmerelements (20) bildendes Verformungselement (21) aufweist und dass an der dreidimensional strukturierten Oberfläche (22) des Messaufnehmerelements (21) ein Messaufnehmersystem (12) gemäß einem der Ansprüche 1 bis 3 derart angeordnet ist, dass mindestens ein Messaufnehmer (14) des Messaufnehmersystems (12) an dem Verformungselement (21) anliegt.

5. Messaufnehmerelement (20) nach Anspruch 4, **dadurch gekennzeichnet, dass** das Messaufnehmerelement (20) einen Kontaktierungsträger (18) mit mehreren Kontaktflächen (24) und/oder mehreren Leiterbahnen (25) aufweist, durch den die Messaufnehmer (14) untereinander kontaktiert werden können und die Messdaten der Messaufnehmer (14) abgelesen werden können.

6. Messaufnehmerelement (20) nach Anspruch 5, **dadurch gekennzeichnet, dass** der Kontaktierungsträger (18) flexibel ist.

7. Messaufnehmerelement (20) nach einem der Ansprüche 4 bis 6, **dadurch gekennzeichnet, dass** das Verformungselement (21) aus einem gießbaren verformbaren Kunststoffmaterial hergestellt ist.

8. Messaufnehmerelement (20) nach einem der Ansprüche 4 bis 7, **dadurch gekennzeichnet, dass** das Verformungselement (21) pyramidenstumpfförmig oder halbsphärenförmig oder zylinderförmig oder kegelstumpfförmig ausgestaltet ist.

9. Verfahren (1) zur Herstellung eines Messaufnehmerelements (20) gemäß einem der Ansprüche 4 bis 8, **dadurch gekennzeichnet, dass** in einem Fertigungsschritt (5) eine Trägerschicht (13) eines Messaufnehmersystems (12) gemäß einem der Ansprüche 1 bis 3 vollständig an eine dreidimensional strukturierte Oberfläche (22) des Messaufnehmerelements (20) angelegt wird und dass dabei ein Flächeninhalt der Trägerschicht (13) konstant bleibt.

10. Verfahren (1) nach Anspruch 9, **dadurch gekennzeichnet, dass** in dem Fertigungsschritt (5) eine Verformungsmasse in eine Negativform (9) mit dem an der Negativform (9) angeordneten Messaufnehmersystem (12) eingeführt wird, die nach deren Verfestigung mindestens ein Verformungselement (21) des Messaufnehmerelements (20) bildet, wobei die Trägerschicht (13) des Messaufnehmersystems (12) an eine dreidimensional strukturierte und die dreidimensional strukturierte Oberfläche (22) des Messaufnehmerelements (20) vorgebende Negativformoberfläche (11) der Negativform (9) angelegt wird.

11. Verfahren (1) nach Anspruch 10, **dadurch gekennzeichnet, dass** nach dem Fertigungsschritt (5) in einem Verfestigungsschritt (6) die Verformungsmasse verfestigt wird.

12. Verfahren (1) nach Anspruch 11, **dadurch gekennzeichnet, dass** in dem Verfestigungsschritt (6) die Verformungsmasse durch UV- und/oder IR- und/oder Mikrowellenstrahlung und/oder Wärmestrahlung verfestigt wird.

13. Verfahren (1) nach einem der Ansprüche 9 bis 12, **dadurch gekennzeichnet, dass** vor dem Fertigungsschritt (5) oder nach dem Fertigungsschritt (5) in einem Kontaktierungsschritt (4) ein Kontaktierungsträger (18) an das Messaufnehmersystem (12) angeordnet wird.

14. Verfahren (1) nach Anspruch 13, **dadurch gekennzeichnet, dass** in dem Kontaktierungsschritt (4) der Kontaktierungsträger (18) und/oder Messaufnehmer (14) das Messaufnehmersystems (12) in einem Bearbeitungsschritt (3) zusätzlich bearbeitet werden.

15. Verfahren (1) nach einem der Ansprüche 10 bis 14, **dadurch gekennzeichnet, dass** nach dem Fertigungsschritt (5) in einem Ablöseschritt (7) die Negativform (9) von dem Messaufnehmerelement (20) entfernt wird.

16. Verfahren (1) nach Anspruch 15, **dadurch gekennzeichnet, dass** nach dem Ablöseschritt (7) in einem Freilegschritt (8) die Trägerschicht (13) des Messaufnehmersystems (12) von dem Messaufnehmerelement (20) entfernt wird, wobei die an dem Messaufnehmersystem (12) angeordnete Messaufnehmer (14) an der dreidimensional strukturierten Oberfläche (22) des Messaufnehmerelements (20) angeordnet bleiben.

17. Einlegteil, **dadurch gekennzeichnet, dass** das Einlegteil mindestens ein Messaufnehmerelement (20) gemäß einem der Ansprüche 4 bis 8 aufweist.

18. Einlegteil nach Anspruch 17, **dadurch gekennzeichnet, dass** das Einlegteil mehrere in einem zweidimensionalen Array angeordnete Messaufnehmerelemente (20) aufweist.

19. Einlegteil nach Anspruch 18, **dadurch gekennzeichnet, dass** das Einlegteil einen Kontaktierungsträger (18) mit mehreren Kontaktflächen (24) und/oder mehreren Leiterbahnen (25) aufweist, durch den die Messaufnehmer (14) der Messaufnehmerelemente (20) untereinander kontaktiert werden können und die Messdaten der Messaufnehmer (14) abgelesen werden können.
